# EUROPÄISCHE PATENTSCHRIFT

(11) **EP 3 883 868 B1**
(45) Veröffentlichungstag und Bekanntmachung des Hinweises auf die Patenterteilung: **22.05.2024**
(21) Anmeldenummer: 19809165.4
(22) Anmeldetag: 14.11.2019
(51) Int. Cl.: B65G 21/14, B65G 47/31

(54) **TELESKOPFÖRDERER MIT INTEGRIERTEM TAKT- UND MESSFÖRDERMITTEL**
TELESCOPIC CONVEYOR WITH INTEGRATED INDEXING AND MEASURING CONVEYING MEANS
CONVOYEUR TÉLESCOPIQUE INTÉGRANT DES MOYENS CONVOYEURS CADENCÉS ET DE MESURE

(30) Priorität: 21.11.2018 DE 102018009134
(43) Veröffentlichungstag der Anmeldung: 29.09.2021
(73) Patentinhaber: Christen, Hansueli, 5079 Zeihen (CH)
(72) Erfinder: Christen, Hansueli, 5079 Zeihen (CH)
(74) Vertreter: Straubel, Dirk
(86) Internationale Anmeldenummer: PCT/IB2019/059781
(87) Internationale Veröffentlichungsnummer: WO 2020/104902

(56) Entgegenhaltungen:
- EP-A1- 0 658 499
- CN-U- 207 876 634
- DE-A1-102010 005 267
- DE-C1- 4 419 113
- JP-A- H0 457 708

## Beschreibung

Die Erfindung betrifft einen Teleskopförderer mit integriertem Takt- und Messfördermittel gemäß den im Oberbegriff des Anspruchs 1 stehenden Merkmalen.

Teleskopförderer werden dazu verwendet, Transportvorrichtungen wie LKW, Container, Wechselbrücken oder Sattelauflieger zu ent- oder beladen. Hierfür weisen die Teleskopförderer ein Gestell mit daran beweglich geführten Teleskopsegmenten auf, die teleskopierbar angeordnet sind, das heißt ineinander oder auseinander gefahren werden können. Bei der Entladung der Transportvorrichtung lassen sich die Teleskopsegmente üblicherweise soweit teleskopieren, dass diese in die Transportvorrichtung hineinreichen und die zu entladenden Sendungen manuell auf den Teleskopförderer aufgeladen werden können. Üblicherweise sind die Teleskopförderer mit einem Transportfördermittel in Form einer Gurtbandanlage ausgestattet, welche sich der jeweiligen Auszugslänge des oder der Teleskopsegmente(s) anpasst und während des Entladungsprozesses kontinuierlich Sendungen fördert. Unter dem Begriff Sendungen werden Stückguteinheiten unterschiedlicher Dimensionierung und äußerer Beschaffenheit verstanden, wie zum Beispiel Pakete oder Päckchen.

Ein Teleskopförderer mit drei teleskopierbaren Teleskopsegmenten ist beispielsweise in der DE 10 2014 103 202 A1 offenbart. In einer Parkposition ist der Teleskopförderer zusammengeschoben und platzsparend unter einem Rollenförderer abgestellt. Zum Erreichen einer Betriebsposition lässt sich zunächst das als Tragegerüst bezeichnete Gestell unter einem Rollentisch vorfahren und anschließend die Teleskopsegmente des Teleskopförderers in Richtung einer zu beladenden Transportvorrichtung herausbewegen. Sowohl das Gestell als auch die teleskopierbaren Teleskopsegmente sind in Führungselementen zwangsgeführt und dadurch verfahrbar angeordnet. Ankommende Sendungen werden vom Bedienpersonal heruntergenommen und in einen Rollcontainer verbracht. Eine derartige manuelle Erfassung und Verteilung der Sendungen hat sich jedoch als zu langsam und ineffizient erwiesen. Darüber hinaus beansprucht die manuelle Erfassung und Verteilung der Sendungen durch Bedienpersonal viel Platz, der meistens in Logistikzentren nicht vorhanden ist und zudem den Vorteil eines möglichst geringen Platzbedarfes des Teleskopförderers zunichte macht.

Einen anderen Stand der Technik beschreibt die DE 102 55 843 A1 mit einem Teleskopförderer, der an seinem vorderen Ende einen Fahrkopf mit einer eigenen Antriebseinrichtung aufweist. Das vordere Ende fährt zum Ent- oder Beladen mittels des Fahrkopfes in die Transportvorrichtung hinein, wodurch die teleskopierbaren Teleskopsegmente entsprechend des Verfahrweges auseinandergezogen sind. Der Fahrkopf dient sowohl dazu, den Teleskopförderer ein- und auszufahren, als auch, optional angeschlossene Zusatzgeräte, wie Handlingroboter oder Entladebänder daran anzubringen und räumlich zu verfahren. Ungeklärt sind bei diesem bekannten Teleskopförderer die Erfassung und die Verteilung der Sendungen nach Verlassen des Teleskopförderers, insbesondere wenn mehrere Sendungen räumlich eng zueinander beabstandet und einzelne Sendungen als solches von einer automatisierten Erfassung nicht erkannt und infolge dessen nicht automatisiert weitertransportiert werden. Die EP 0 658 499 A1 offenbart einen Teleskopförderer mit den Merkmalen des Oberbegriffs des Anspruchs 1.

Folglich lag der Erfindung die Aufgabe zugrunde, einen Teleskopförderer bereitzustellen, der eine automatisierte Vereinzelung darauf befindlicher Sendungen bei möglichst geringem Platzbedarf ermöglicht.

Die Aufgabe wird erfindungsgemäß mit den Merkmalen des Anspruchs 1 gelöst. Der Teleskopförderer dient insbesondere der Entladung einer Transportvorrichtung und bereitet auf dem Transportfördermittel aufliegende Sendungen auf den Weitertransport vor. Das in den Teleskopförderer integrierte Takt- und Messfördermittel erzeugt aufgrund seiner bezüglich des Transportfördermittels höheren, zweiten Fördergeschwindigkeit einen Abstand in Förderrichtung zwischen benachbarten Sendungen. Dieser Abstand wird benötigt, um eine automatisierte Längenmessung jeder individuellen Sendung durchführen zu können. Im Falle sich überlappender Sendungen wäre eine Längenmessung nur mit großem Aufwand möglich, da überlappende Sendungen von einem automatisierten Erfassungssystem leicht als einzige Sendung interpretiert werden könnten. Darüber hinaus ist es auch notwendig, einen Abstand zwischen den Sendungen herzustellen, um diese individuell zum Beispiel einem Sorter zuführen zu können. Andernfalls bestünde das Risiko, dass versehentlich mehrere Sendungen gleichzeitig von dem Sorter erfasst würden und ein Fehler in der Verteilung dieser Sendungen entstünde.

Ein wesentlicher Vorteil des erfindungsgemäßen Teleskopförderers besteht darin, dass das Herstellen des Abstandes bei konstanter erster Fördergeschwindigkeit des Transportfördermittels erfolgt und das Auflegen weiterer Sendungen auf das Transportfördermittel nicht verzögert wird oder die erste Fördergeschwindigkeit des Transportfördermittel verlangsamt oder gestoppt zu werden braucht. Aufgrund der höheren, zweiten Fördergeschwindigkeit des Takt- und Messfördermittels entstehen Lücken zwischen den Sendungen oder es werden bereits vorhandene Lücken vergrößert.

Erfindungsgemäß sind das Takt- und Messfördermittel sowie das Transportfördermittel an einem gemeinsamen Gestell befestigt. Das Gestell dient somit der Aufnahme eines oder mehrerer teleskopierbarer Teleskopsegmente, des über das Gestell und das oder die Teleskopsegment(e) hinweglaufenden Transportfördermittels sowie des vollständigen Takt- und Messfördermittels. Aufgrund der Integration des Takt- und Messfördermittels in das Gestell des Teleskopförderers lassen sich besonders kompakte Abmessungen realisieren, so dass der Teleskopförderer mit dem darin verbauten Takt- und Messfördermittel besonders gut in bestehende Anlagen integrierbar ist, die bisher ohne ein Takt- und Messfördermittel, sondern mit einer Erfassung und Verteilung der Sendungen durch Bedienpersonal betrieben wurden und bei denen kein freier Bauraum für ein externes Takt- und Messfördermittel vorhanden ist.

Es kann gemäß einer besonderen Ausführungsform vorgesehen sein, dass das Takt- und Messfördermittel eine Länge von 1,20 m bis 2,40 m, besonders bevorzugt 1,40 m bis 2,20 m, ganz besonders bevorzugt 1,60 m bis 2,00 m aufweist. Diese Länge hat sich als besonders günstig erwiesen, um ein schlupffreies Liegenbleiben der Sendung auf dem Takt- und Messfördermittel und eine daraus resultierende Beschleunigung auf die zweite Fördergeschwindigkeit realisieren zu können.

Vorzugsweise beträgt die erste Fördergeschwindigkeit des Transportfördermittels 0,6 m/s bis 0,8 m/s und die zweite Fördergeschwindigkeit des Takt- und Messfördermittels ist zwischen 0,2 m/s und 0,4 m/s schneller als die erste Fördergeschwindigkeit gewählt. Diese Differenz zwischen erster und zweiter Fördergeschwindigkeit ist ausreichend, um die angestrebte Beabstandung zwischen benachbarten Sendungen in Förderrichtung herstellen zu können.

Vorteilhafterweise ist das Transportfördermittel und/oder das Takt- und Messfördermittel eine Gurtbandanlage. Gemäß einer alternativen Ausführungsform kann das Transportfördermittel auch ein angetriebener Rollenförderer sein. Ein angetriebener Rollenförderer weist üblicherweise mehrere quer zur Förderrichtung angeordnete Tragrollen auf, von denen alle oder einzelne mittels motorischer Antriebsvorrichtung(en) im Drehung versetzt sind und eine darüber hinweg gleitende Sendung in Förderrichtung beschleunigen.

Zweckmäßigerweise weist die Gurtbandanlage einen umlaufenden Fördergurt auf. Dieser kann auf Tragrollen oder Gleitbahnen aufliegen und gleichzeitig als Trag- und Zugmittel dienen.

Es hat sich als besonders günstig herausgestellt, wenn der umlaufende Fördergurt des Transportfördermittels zumindest abschnittsweise unter das Takt- und Messfördermittel geführt ist. Bei dieser Ausführungsform überlappen sich das Transportfördermittel sowie das Takt- und Messfördermittel in Förderrichtung teilweise, wodurch eine besonders kompakte Bauweise innerhalb des gemeinsamen Gestells erzielt wird, da Komponenten des Transportfördermittels in einen ansonsten freien Bauraum innerhalb des Gestells verlegt sind und in dem Gestell seitens des mindestens einen Teleskopsegmentes ein maximaler Verfahrweg für das mindestens eine Teleskopsegment zur Verfügung steht. Aus diesem Merkmal resultiert eine weitere Verringerung des Platzbedarfes für den Teleskopförderer bei eingefahrener Position des mindestens einen Teleskopsegmentes.

Vorteilhafterweise ist der umlaufende Fördergurt des Transportfördermittels von einer unter dem Takt- und Messfördermittel angeordneten Antriebsstation angetrieben. Die Antriebsstation stellt eine Komponente des Transportfördermittels dar, die besonders geeignet ist, in den Bereich unter dem Takt- und Messfördermittel verlagert zu werden. Der Fördergurt ist durch Umlenkrollen ebenfalls bis zu der Antriebsstation geführt und läuft in diesem Abschnitt innerhalb des Gestells.

Die Antriebsstation kann einen Motor und/oder ein Kraftübertragungsmittel und/oder eine Antriebsrolle aufweisen. Bei dem Motor handelt es sich typischerweise um einen Elektromotor, insbesondere um einen Gleichstrommotor, welcher eine einfache Ansteuerung und kompakte Abmessungen ermöglichst. Der Fördergurt sollte mit einem Umschlingungswinkel von mindestens 120° auf die Antriebsrolle aufgelegt sein und diesen reibschlüssig mit der eingestellten ersten Fördergeschwindigkeit antreiben.

Gemäß einer besonders sinnvollen Ausgestaltung kann das Takt- und Messfördermittel eine Aufladeseite und eine Abladeseite aufweisen, wobei die Aufladeseite an die Abgabeseite des Transportfördermittels in Förderrichtung angrenzt und auf der Abladeseite die bereits vereinzelte Sendung den Teleskopförderer verlässt. Dabei können sich die Abgabeseite des Transportfördermittels und die Aufladeseite des Takt- und Messfördermittels mit ihren Stirnseiten gegenüberstehen, was insbesondere bei einem miteinander fluchtend in dem Gestell angeordneten Transportfördermittel sowie Takt- und Messfördermittel der Fall ist.

Zweckmäßigerweise ist die Abgabeseite des Transportfördermittels auf demselben vertikalen Niveau wie die Aufladeseite des Takt- und Messfördermittels angeordnet. Hierdurch wird eine Wurfbahn der von dem Transportfördermittel auf das Takt- und Messfördermittel übergebenen Sendungen vermieden und es liegt möglichst schon im Bereich der Aufladeseite eine reibschlüssige Verbindung zwischen Sendung sowie Takt- und Messfördermittel vor, so dass die von der Abgabeseite auf die Aufladeseite überlaufende Sendung möglichst frühzeitig auf die zweite Fördergeschwindigkeit beschleunigt und ein entsprechend großer Abstand zu der noch auf dem Transportfördermittel befindlichen, nachfolgenden Sendung hergestellt ist.

Vorzugsweise ist die Abgabeseite des Transportfördermittels bezüglich des Gestells mittels einer Höhenverstelleinrichtung vertikal verstellbar. Die Höhenverstelleinrichtung kann einen in Richtung der Abgabeseite ansteigenden Keil aufweisen, über den der Fördergurt hinwegläuft.

Es ist ebenso möglich, dass eine Aufgabeseite des Transportfördermittels über eine Hubeinrichtung höhenverstellbar ist. Die Hubeinrichtung kann beispielsweise derart an dem Gestell angeordnet sein, dass dieses einseitig auf der Aufgabeseite an- oder absenkbar ist. Mit Hilfe der Hubeinrichtung kann die Aufgabeseite des Transportfördermittels in ihrer vertikalen Höhe auf ein ergonomisch günstiges Niveau gebracht werden, so dass Sendungen vom Bedienpersonal ermüdungsfrei auf das Transportfördermittel auflegbar sind.

Erfindungsgemäß ist über dem Takt- und Messfördermittel ein Sensor zur Erfassung einer auf dem Takt- und Messfördermittels befindlichen Sendung angeordnet. Der Sensor ist zweckmäßigerweise an der Abladeseite des Takt- und Messfördermittels angebracht, da die von dem Sensor zu erfassende Sendung in diesem Bereich bereits auf die zweite Fördergeschwindigkeit beschleunigt und der maximal erreichbare Abstand zu der nachfolgenden Sendung ausgebildet ist. Der Sensor sollte über dem Takt- und Messfördermittel angeordnet sein und dessen Messkeule über das Takt- und Messfördermittel hinwegreichen.

Zum besseren Verständnis wird die Erfindung nachfolgend anhand von zwei Figuren erläutert. Es zeigen die
- **Fig. 1:**: einen Längsschnitt durch einen Teleskopförderer gemäß einer ersten Ausführungsform und
- **Fig. 2:**: einen Längsschnitt durch einen Teleskopförderer gemäß einer zweiten Ausführungsform.

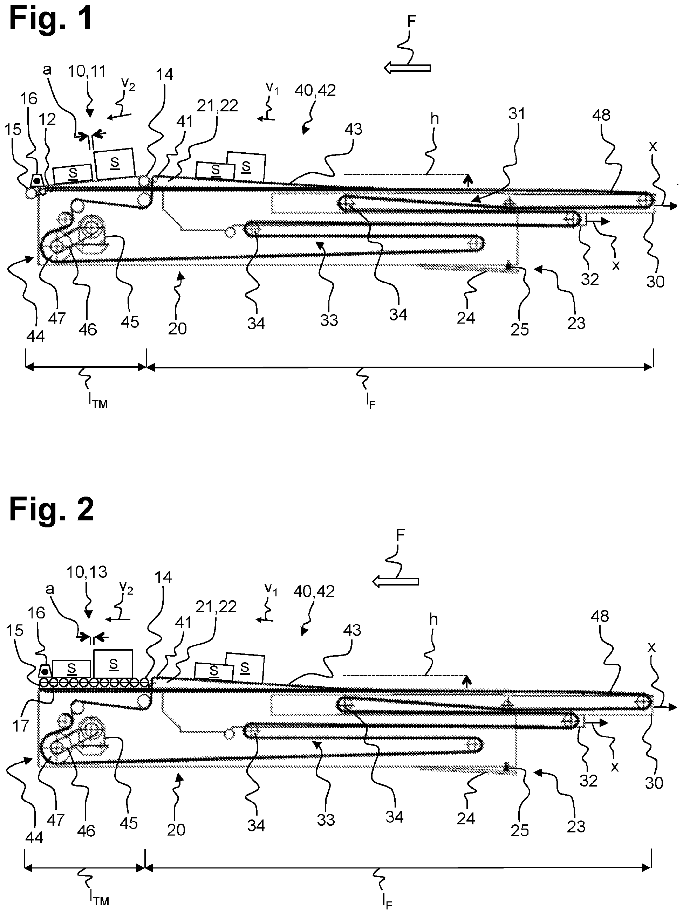

In der Fig. 1 ist eine erste Ausführungsform des Teleskopförderers dargestellt, dessen Transportfördermittel 40 sowie Takt- und Messfördermittel 10 als Gurtbandanlage 42, 11 ausgebildet sind.

Der Teleskopförderer umfasst ein ortsfest auf dem Boden aufstehendes Gestell 20, an welchem ein erstes und zweites Teleskopsegment 30, 32 unabhängig voneinander in einer Verfahrrichtung x bezüglich des Gestells 20 linear geführt sind. Die Teleskopsegmente 30, 32 sind ausschließlich am Gestell 20 abgestützt. Prinzipiell wäre es auch möglich, lediglich ein einziges Teleskopsegment 30 oder noch weitere, insbesondere bis zu fünf Teleskopsegmente 32 vorzusehen.

In der Darstellung der Fig. 1 und Fig. 2 ist das erste Teleskopsegment 30 teilweise aus dem Gestell 20 herausgefahren. Das zweite Teleskopsegment 32 befindet sich in einer in das Gestell 20 eingefahrenen Position. Die Verfahrrichtung x beider Teleskopsegmente 30, 32 ist parallel zueinander und parallel zum Boden ausgerichtet. In Abhängigkeit der ausgefahrenen Position des oder der Teleskopsegmente 30, 32 bezüglich des Gestells 20 wandert eine Aufgabeseite 48 für aufzuladende Sendungen S hin zu oder weg von dem Gestell 20, das heißt in der Bildebene der Fig. 1 und Fig. 2 nach rechts oder links. Die Aufgabeseite 48 ist stets auf dem ersten Teleskopsegment 30 angeordnet. Hierdurch lässt sich der Teleskopförderer in Transportvorrichtungen wie beispielsweise Container oder Wechselbrücken hineinfahren, so dass die zu entladenden Sendungen S ohne Laufwege des Bedienpersonals auf die Aufgabeseite 48 gelegt werden können.

Das Transportfördermittel 40 läuft sowohl über das feststehende Gestell 20 als auch über das erste und zweite Teleskopsegment 30, 31 hinweg. Die als Transportfördermittel 40 eingesetzte Gurtbandanlage 42 weist hierfür einen Fördergurt 43 auf, der als Endlosgurt ausgeführt ist. Der Fördergurt 43 ist auf der Oberseite des ersten Teleskopsegments 30 und des Gestells 20 bis zu einer Abgabeseite 41 geführt und taucht dort zu einer in dem Gestell 20 angeordneten Antriebsstation 44 ab. Die Antriebsstation 44 umfasst einen in der Regel elektrisch angetriebenen Motor 45, der über ein Kraftübertragungsmittel 46 wie beispielsweise einen Treibriemen eine Antriebsrolle 47 in eine Drehbewegung versetzt. Von der Antriebsstation 44 ist der Fördergurt 43 innerhalb des Gestells 20 zu dem von der Antriebsstation 44 abgewandten Ende geführt.

An dem distalen Ende des ersten Teleskopsegmentes 30 ist der Fördergurt 43 um 180° umgelenkt und verläuft innerhalb des ersten Teleskopsegmentes 30 zu einer an dessen proximalen Ende angeordneten Spannrolle 34, die ortsfest an dem ersten Teleskopsegment 30 und in Verfahrrichtung x verschiebbar bezüglich des Gestells 20 gelagert ist. Die Spannrolle 34 des ersten Teleskopsegmentes 30 und der darüber hinweglaufende Abschnitt des Fördergurtes 43 bilden eine erste Bandschleife 31.

Von der ersten Bandschleife 31 des ersten Teleskopsegmentes 30 verläuft der Fördergurt 43 über das distale Ende des zweiten Teleskopsegmentes 32 und von dort zu einer weiteren Spannrolle 34, die ortsfest an dem proximalen Ende des zweiten Teleskopsegment 32 und in Verfahrrichtung x verschiebbar bezüglich des Gestells 20 gelagert ist. Die Spannrolle 34 des zweiten Teleskopsegmentes 32 und der darüber hinweglaufende Abschnitt des Fördergurtes 43 bilden eine zweite Bandschleife 33. Mit Hilfe der ersten und zweiten Bandschleife 31, 33 lassen sich das erste und zweite Teleskopsegment 30, 32 bezüglich des Gestells 20 unabhängig von der Vorspannung des Fördergurtes 43 verfahren, woraus ein minimierter Schlupf des Fördergurtes 43 an der Antriebsrolle 47 resultiert.

Die Aufgabeseite 48 ist über eine Hubeinrichtung 23 in ihrer vertikalen Höhe einstellbar, wobei die Hubeinrichtung 23 einen ortsfest am Boden aufstehenden Standfuß 24 aufweist, der mittels eines Stellmittels 25 gegenüber dem Gestell 20 abgestützt ist. Das Stellmittel 25 kann zum Beispiel einen Hydraulikzylinder oder eine Spindel umfassen. Aus Stabilitätsgründen kann der Standfuß 24 als Schwinge ausgeführt sein und mit einem Endabschnitt drehbeweglich an dem Gestell 20 befestigt sein.

In das Gestell 20 ist außer dem Transportfördermittel 40 noch das Takt- und Messfördermittel 10 integriert. Das Transportfördermittel 40 weist eine für den Transport von Sendungen S nutzbare Länge I_{F} auf, die unabhängig von dem Ausfahrzustand der Teleskopsegmente 30, 32 mindestens die dreifache Länge I_{TM} des Takt- und Messfördermittels 10 beträgt. Das Transportfördermittel 40 läuft dabei mit einer ersten Fördergeschwindigkeit v₁ und transportiert auf der Aufgabeseite 48 aufgegebene Sendungen S in Förderrichtung F zu dem Takt- und Messfördermittels 10. Das Takt- und Messfördermittel 10 ist folglich in Förderrichtung F hinter dem Transportfördermittel 40 angeordnet, wobei die Gurtbandanlage 11 des Takt- und Messfördermittels 10 einen Fördergurt 12 aufweist, der mit einer zweiten Fördergeschwindigkeit v₂ angetrieben ist. Die zweite Fördergeschwindigkeit v₂ ist grundsätzlich höher als die erste Fördergeschwindigkeit v₁ gewählt.

Während eines Beladens des Transportfördermittels 40 kann es vorkommen, dass Sendungen S nebeneinander und in Förderrichtung F überlappend an der Aufgabeseite 48 auf den Fördergurt 43 gelegt werden. Aufgrund der verhältnismäßig höheren, zweiten Fördergeschwindigkeit v₂ erfolgt eine Beschleunigung des an einer Aufladeseite 14 zuerst auf das Takt- und Messfördermittel 10 auftreffenden Sendung S bezüglich der noch auf dem vorgeschalteten Transportfördermittels 40 befindlichen Sendung S, so dass zwischen den Sendungen S ein Abstand a entsteht. Die sich auf dem Transportfördermittel 40 noch überlappenden Sendungen S sind auf dem Takt- und Messfördermittel 10 in Förderrichtung F separiert. Ein über dem Takt- und Messfördermittel 10 im Bereich von dessen Abladeseite 15 angeordneter Sensor 16 erfasst die mit der zweiten Fördergeschwindigkeit v₂ daran vorbeifahrenden Sendungen S, kann diese aufgrund des zwischen den Sendungen S ausgebildeten Abstandes a vermessen und diesen Messwert eindeutig der zugehörigen Sendung S zuordnen.

Das Takt- und Messfördermittel 10 ist vollständig in das Gestell 20 integriert, so dass alle Komponenten der Gurtbandanlage 11 mechanisch an dem Gestell 20 angreifen und daran befestigt sind. Um eine in Förderrichtung F möglichst kompakte Bauweise des Teleskopförderers erzielen zu können, überlappen sich das Transportfördermittel 40 und das Takt- und Messfördermittel 10 in Förderrichtung F abschnittsweise. Ein innerhalb des Gestells 20 umgelenkter Abschnitt des Fördergurtes 43 verläuft unter das Takt- und Messfördermittel 10 und ist unter dem Takt- und Messfördermittel 10 auf die Antriebsstation 44 aufgelegt. Die Antriebsstation 44 des Transportfördermittels 40 ist somit innerhalb des Gestells 20 und räumlich unter dem Takt- und Messfördermittel 10 angeordnet, so dass der Bauraum innerhalb des Gestells 20 und unter der nutzbaren Länge I_{F} des Transportfördermittels 40 zur Aufnahme der ersten und zweiten Teleskopsegmente 30, 32 in deren eingefahrenen Position zur Verfügung steht. Hierdurch lässt sich einerseits eine äußerst kompakte Bauweise des Teleskopförderers bei eingefahrenen ersten und zweiten Teleskopsegmenten 30, 32 und andererseits eine maximale Reichweite des Transportfördermittels 40 bei ausgefahrenen ersten und zweiten Teleskopsegmenten 30, 32 erzielen.

Das Transportfördermittel 40 weist an seiner Abgabeseite 41 eine Höhenverstelleinrichtung 21 auf, mit welcher ein vertikales Niveau h der Abgabeseite 41 veränderbar ist. Die Höhenverstelleinrichtung 21 umfasst einen in Förderrichtung F ansteigenden Keil 22, über welchen der Fördergurt 43 hinwegläuft. Der Fördergurt 43 folgt somit der eingestellten Neigung des Keils 22. Mit Hilfe der Höhenverstelleinrichtung 21 lässt sich insbesondere das vertikale Niveau h der Abgabeseite 41 an das Niveau der Aufladeseite 14 eines höhenverstellbaren Takt- und Messfördermittels 10 anpassen.

Die Fig. 2 zeigt eine alternative Ausführungsform, bei welcher das Takt- und Messfördermittel 10 nicht als Gurtbandanlage 11 sondern als angetriebener Rollenförderer 13 ausgebildet ist. Der angetriebene Rollenförderer 13 weist mehrere Tragrollen 17 auf, von denen alle oder mehrere motorisch in Rotation versetzt sind und Sendungen S auf eine zweite Fördergeschwindigkeit v₂ beschleunigen. Auch bei dieser Ausführungsform sind Abschnitte des Transportfördermittels 40 in Förderrichtung F überlappend unter dem angetriebenen Rollenförderer 13 angeordnet, insbesondere die Antriebsstation 44.

### Bezugszeichenliste

- 10: Takt- und Messfördermittel
- 11: Gurtbandanlage
- 12: Fördergurt
- 13: angetriebener Rollenförderer
- 14: Aufladeseite
- 15: Abladeseite
- 16: Sensor
- 17: Tragrollen

- 20: Gestell
- 21: Höhenverstelleinrichtung
- 22: Keil
- 23: Hubeinrichtung
- 24: Standfuß
- 25: Stellmittel

- 30: erstes Teleskopsegment
- 31: erste Bandschleife
- 32: zweites Teleskopsegment
- 33: zweite Bandschleife
- 34: Spannrolle

- 40: Transportförderm ittel
- 41: Abgabeseite
- 42: Gurtbandanlage
- 43: Fördergurt
- 44: Antriebsstation
- 45: Motor
- 46: Kraftübertragungsmittel
- 47: Antriebsrolle
- 48: Aufgabeseite

- a: Abstand Sendung
- F: Förderrichtung
- h: vertikales Niveau
- I_{TM}: Länge Takt- und Messfördermittel
- I_{F}: Länge Transportfördermittel
- S: Sendung
- v₁: erste Fördergeschwindigkeit
- v₂: zweite Fördergeschwindigkeit
- x: Verfahrrichtung Teleskopsegmente

## Patentansprüche

1. Teleskopförderer mit integriertem Takt- und Messfördermittel (10), wobei der Teleskopförderer ein Gestell (20), mindestens ein bezüglich des Gestells (20) ausziehbar gelagertes Teleskopsegment (30, 32) und ein Transportfördermittel (40) aufweist, wobei das Transportfördermittel (40) mit einer ersten Fördergeschwindigkeit (v₁) angetrieben und an dem mindestens einen Teleskopsegment (30, 32) sowie dem Gestell (20) abgestützt ist, wobei das Takt- und Messfördermittel (10) auf einer Abgabeseite (41) des Transportfördermittels (40) angeordnet, an demselben Gestell (20) gelagert und mit einer zweiten Fördergeschwindigkeit (v₂) angetrieben ist, wobei die zweite Fördergeschwindigkeit (v₂) größer als die erste Fördergeschwindigkeit (v₁) ist,
**dadurch gekennzeichnet,**
**dass** über dem Takt- und Messfördermittel (10) ein Sensor (16) zur Erfassung einer auf dem Takt- und Messfördermittels (10) befindlichen Sendung (S) angeordnet ist.

2. Teleskopförderer nach Anspruch 1, **dadurch gekennzeichnet, dass** Takt- und Messfördermittel (10) eine Länge (I_{TM}) von 1,20 m bis 2,40 m, besonders bevorzugt 1,40 m bis 2,20 m, ganz besonders bevorzugt 1,60 m bis 2,00 m aufweist.

3. Teleskopförderer nach Anspruch 1 oder 2, **dadurch gekennzeichnet, dass** die erste Fördergeschwindigkeit (v₁) des Transportfördermittels (40) 0,6 m/s bis 0,8 m/s beträgt.

4. Teleskopförderer nach Anspruch 3, **dadurch gekennzeichnet, dass** die zweite Fördergeschwindigkeit (v₂) des Takt- und Messfördermittels (10) zwischen 0,2 m/s und 0,4 m/s schneller als die erste Fördergeschwindigkeit (v₁) ist.

5. Teleskopförderer nach einem der Ansprüche 1 bis 4, **dadurch gekennzeichnet, dass** das Transportfördermittel (40) und/oder das Takt-und Messfördermittel (10) eine Gurtbandanlage (42, 11) ist.

6. Teleskopförderer nach einem der Ansprüche 1 bis 4, **dadurch gekennzeichnet, dass** das Takt- und Messfördermittel (10) ein angetriebener Rollenförderer (13) ist.

7. Teleskopförderer nach Anspruch 5, **dadurch gekennzeichnet, dass** die Gurtbandanlage (42, 11) einen umlaufenden Fördergurt (43, 12) aufweist.

8. Teleskopförderer nach Anspruch 7, **dadurch gekennzeichnet, dass** der umlaufende Fördergurt (43) des Transportfördermittels (40) zumindest abschnittsweise unter das Takt- und Messfördermittel (10) geführt ist.

9. Teleskopförderer nach Anspruch 8, **dadurch gekennzeichnet, dass** der umlaufende Fördergurt (43) des Transportfördermittels (40) von einer unter dem Takt- und Messfördermittel (10) angeordneten Antriebsstation (44) angetrieben ist.

10. Teleskopförderer nach Anspruch 9, **dadurch gekennzeichnet, dass** die Antriebsstation (44) einen Motor (45) und/oder ein Kraftübertragungsmittel (46) und/oder eine Antriebsrolle (47) aufweist.

11. Teleskopförderer nach einem der Ansprüche 1 bis 10, **dadurch gekennzeichnet, dass** das Takt- und Messfördermittel (10) eine Aufladeseite (14) und eine Abladeseite (15) aufweist, wobei die Aufladeseite (14) an die Abgabeseite (41) des Transportfördermittels (40) angrenzt.

12. Teleskopförderer nach Anspruch 11, **dadurch gekennzeichnet, dass** die Abgabeseite (41) des Transportfördermittels (40) auf demselben vertikalen Niveau (h) wie die Aufladeseite (14) des Takt- und Messfördermittels (10) angeordnet ist.

13. Teleskopförderer nach einem der Ansprüche 1 bis 12, **dadurch gekennzeichnet, dass** die Abgabeseite (41) des Transportfördermittels (40) bezüglich des Gestells (20) mittels einer Höhenverstelleinrichtung (21) vertikal verstellbar ist.

14. Teleskopförderer nach Anspruch 13 soweit auf Anspruch 7 bezogen, **dadurch gekennzeichnet, dass** die Höhenverstelleinrichtung (21) einen in Richtung der Abgabeseite (41) des Transportfördermittels (40) ansteigenden Keil (22) aufweist, über den der Fördergurt (43) hinwegläuft.

15. Teleskopförderer nach einem der Ansprüche 1 bis 14, **dadurch gekennzeichnet, dass** eine Aufgabeseite (48) des Transportfördermittels (40) über eine Hubeinrichtung (23) höhenverstellbar ist.

## Claims

1. Telescopic conveyor with integrated indexing and measuring conveyor means (10), the telescopic conveyor having a frame (20), at least one telescopic segment (30, 32) mounted so as to be extendable with respect to the frame (20) and a transport conveyor (40), the transport conveyor (40) is driven at a first conveying speed (v₁) and is supported on the at least one telescopic segment (30, 32) and on the frame (20) and wherein the indexing and measuring conveyor means (10) is arranged on a delivery side (41) of the transport conveyor (40), wherein the indexing and measuring conveyor means (10) is mounted on the same frame (20) and is driven at a second conveying speed (v₂), the second conveying speed (v₂) being greater than the first conveying speed (v₁),
**characterized in that**
a sensor (16) for detecting a packet (S) located on the indexing and measuring conveyor means (10) is arranged above the indexing and measuring conveyor means (10).

2. Telescopic conveyor according to claim 1, **characterized in that** the indexing and measuring conveyor means (10) is having a length (l_{TM}) of 1.20 m to 2.40 m, particularly preferably 1.40 m to 2.20 m, very particularly preferably 1,60 m to 2.00 m.

3. Telescopic conveyor according to claim 1 or 2, **characterized in that** the first conveying speed (v₁) of the transport conveyor (40) is 0.6 m/s to 0.8 m/s.

4. Telescopic conveyor according to claim 3, **characterized in that** the second conveying speed (v₂) of the indexing and measuring conveyor means (10) is between 0.2 m/s and 0.4 m/s faster than the first conveying speed (v₁) .

5. Telescopic conveyor according to one of claims 1 to 4, **characterized in that** the transport conveyor (40) and/or the indexing and measuring conveyor means (10) is a belt (conveyor) system (42, 11).

6. Telescopic conveyor according to one of claims 1 to 4, **characterized in that** the indexing and measuring conveyor means (10) is a driven roller conveyor (13).

7. Telescopic conveyor according to claim 5, **characterized in that** each belt (conveyor) system (42, 11) has a circulating transport or conveyor belt (43, 12).

8. Telescopic conveyor according to claim 7, **characterized in that** the circulating transport belt (43) of the transport conveyor (40) is guided at least partially under the indexing and measuring conveyor means (10).

9. Telescopic conveyor according to claim 8, **characterized in that** the circulating conveyor belt (43) of the transport conveyor (40) is driven by a drive station (44) arranged under the indexing and measuring conveyor means (10).

10. Telescopic conveyor according to claim 9, **characterized in that** the drive station (44) has a motor (45) and/or a power transmission means (46) and/or a drive roller (47).

11. Telescopic conveyor according to one of claims 1 to 10, **characterized in that** the indexing and measuring conveyor means (10) has a loading side (14) and an unloading side (15), wherein the loading side (14) is adjoining the delivery side (41) of the transport conveyor (40) .

12. Telescopic conveyor according to claim 11, **characterized in that** the delivery side (41) of the transport conveyor (40) is arranged on the same vertical level (h) as the loading side (14) of the indexing and measuring conveyor means (10).

13. Telescopic conveyor according to one of claims 1 to 12, **characterized in that** the delivery side (41) of the transport conveyor (40) is vertically adjustable with respect to the frame (20) by means of a height adjustment device (21).

14. Telescopic conveyor according to claim 13 as far as related to claim 7, **characterized in that** the height adjustment device (21) has a wedge (22) which rises in the direction of the delivery side (41) of the transport conveyor (40), wherein the transport belt (43) runs over the wedge (22).

15. Telescopic conveyor according to one of claims 1 to 14, **characterized in that** a charging side (48) of the transport conveyor (40) is adjustable in height via a lifting device (23).

## Revendications

1. Convoyeur télescopique intégrant des moyens convoyeurs cadencés et de mesure (10), dans lequel le convoyeur télescopique comporte un châssis (20), au moins un segment télescopique (30, 32) qui est monté de manière à pouvoir être sorti par rapport au châssis (20), et un moyen convoyeur de transport (40), dans lequel le moyen convoyeur de transport (40) est entraîné à une première vitesse de convoyage (v₁) et prend appui sur l'au moins un segment télescopique (30, 32) et sur le châssis (20), dans lequel le moyen convoyeur cadencé et de mesure (10) est disposé sur un côté de sortie (41) du moyen convoyeur de transport (40), monté sur le même châssis (20) et entraîné à une seconde vitesse de convoyage (v₂), dans lequel la seconde vitesse de convoyage (v₂) est supérieure à la première vitesse de convoyage (v₁),
**caractérisé en ce**
**qu'**un capteur (16) est disposé au-dessus du moyen convoyeur cadencé et de mesure (10) pour détecter un envoi (S) se trouvant sur le moyen convoyeur cadencé et de mesure (10).

2. Convoyeur télescopique selon la revendication 1, **caractérisé en ce que** le moyen convoyeur cadencé et de mesure (10) a une longueur (I_{TM}) allant de 1,20 m à 2,40 m, de manière particulièrement préférée de 1,40 m à 2,20 m, de manière tout particulièrement préférée de 1,60 m à 2,00 m.

3. Convoyeur télescopique selon la revendication 1 ou 2, **caractérisé en ce que** la première vitesse de convoyage (v₁) du moyen convoyeur de transport (40) est de 0,6 m/s à 0,8 m/s.

4. Convoyeur télescopique selon la revendication 3, **caractérisé en ce que** la seconde vitesse de convoyage (v₂) du moyen convoyeur cadencé et de mesure (10) est supérieure à la première vitesse de convoyage (v₁) de 0,2 m/s à 0,4 m/s.

5. Convoyeur télescopique selon l'une des revendications 1 à 4, **caractérisé en ce que** le moyen convoyeur de transport (40) et/ou le moyen convoyeur cadencé et de mesure (10) est un système à bande (42, 11).

6. Convoyeur télescopique selon l'une des revendications 1 à 4, **caractérisé en ce que** le moyen convoyeur cadencé et de mesure (10) est un convoyeur à rouleaux entraînés (13).

7. Convoyeur télescopique selon la revendication 5, **caractérisé en ce que** le système à bande (42, 11) comporte une bande transporteuse circulante (43, 12).

8. Convoyeur télescopique selon la revendication 7, **caractérisé en ce que** la bande transporteuse circulante (43) du moyen convoyeur de transport (40) est guidée au moins par endroits sous le moyen convoyeur cadencé et de mesure (10).

9. Convoyeur télescopique selon la revendication 8, **caractérisé en ce que** la bande transporteuse circulante (43) du moyen convoyeur de transport (40) est entraînée par un poste d'entraînement (44) disposé sous le moyen convoyeur cadencé et de mesure (10).

10. Convoyeur télescopique selon la revendication 9, **caractérisé en ce que** le poste d'entraînement (44) comporte un moteur (45) et/ou un moyen de transmission de force (46) et/ou un rouleau d'entraînement (47).

11. Convoyeur télescopique selon l'une des revendications 1 à 10, **caractérisé en ce que** le moyen convoyeur cadencé et de mesure (10) comporte un côté de chargement (14) et un côté de déchargement (15), dans lequel le côté de chargement (14) est adjacent au côté de sortie (41) du moyen convoyeur de transport (40).

12. Convoyeur télescopique selon la revendication 11, **caractérisé en ce que** le côté de sortie (41) du moyen convoyeur de transport (40) est disposé au même niveau vertical (h) que le côté de chargement (14) du moyen convoyeur cadencé et de mesure (10).

13. Convoyeur télescopique selon l'une des revendications 1 à 12, **caractérisé en ce que** le côté de sortie (41) du moyen convoyeur de transport (40) est réglable verticalement par rapport au châssis (20) au moyen d'un dispositif de réglage en hauteur (21).

14. Convoyeur télescopique selon la revendication 13 dans la mesure où elle se rapporte à la revendication 7, **caractérisé en ce que** le dispositif de réglage en hauteur (21) comporte une cale (22) s'élevant en direction du côté de sortie (41) du moyen convoyeur de transport (40), sur laquelle passe la bande transporteuse (43).

15. Convoyeur télescopique selon l'une des revendications 1 à 14, **caractérisé en ce qu'**un côté d'entrée (48) du moyen convoyeur de transport (40) est réglable en hauteur par le biais d'un dispositif de levage (23).
